# EUROPEAN PATENT APPLICATION

(11) **EP 4 760 570 A1**
(43) Date of publication of application: **17.06.2026**
(21) Application number: 24307123.0
(22) Date of filing: 16.12.2024
(51) Int. Cl.: G06F 21/60, G06Q 20/36, H04L 9/08, G06F 21/10, H04L 9/40, H04W 12/06

(54) **METHOD FOR A READER TO ACCESS USER ATTRIBUTES FROM A WALLET**

(71) Applicant: THALES DIS FRANCE SAS, 92190 Meudon (FR)
(72) Inventor: DURAND, Stéphane, 78140 Vélizy Villacoublay (FR); WEBSTER, Michael, 01510 Vantaa (FI); FAHER, Mourad, 78160 Marly le Roi (FR)
(74) Representative: Quintero Romero, Manuel

(57) **Abstract**

The invention provides a method for a reader to access user attributes from a wallet, the method comprising the steps of:
- sending, by the wallet, a wallet public key to the reader which, in turns, forwards the wallet public key and an attribute request to an authorizer; wherein the attribute request indicates at least one user attribute;
- enforcing, by the authorizer, an access policy determining if the reader can access the at least one user attribute of the attribute request and, if authorized, generating a session key based on the wallet public key and a reader private key;
- receiving, by the wallet, a reader public key and the attribute request; wherein the wallet generates an attribute document comprising part or all of the requested at least one user attribute, and generates the session key based on a wallet private key and the reader public key;
- encrypting, by the wallet, the attribute document using the generated session key, and sending the encrypted attribute document to the reader;
- requesting, by the reader, the session key to the authorizer; and
- sending, by the authorizer, the session key to the reader for the reader to decrypt the attribute document and access the at least one user attribute comprised therein.

## Description

### TECHNICAL FIELD

This invention relates to the technical field of digital credentials and attributes, and, particularly, introduces an authorising party that asserts access conditions for a reader wishing to read attributes from a user wallet.

In advantageous embodiments, this authorising party enforces further policies in a privacy-compliant manner enabling conditional accesses if certain requisites are met.

### BACKGROUND OF THE INVENTION

A natural or legal person is generally associated to several personal attributes issued by an issuing authority (e.g., governments or institutions), that enable its authentication to third parties. Such personal attributes are usually written on hardware objects, such as an ID card, or stored in an electronic way in personal hardware tokens such as electronic identity card, i.e., elD card.

With the emergence of digital or online networks and services, personal attributes tend to be further represented in a digital form. Digital personal attributes can be used, for instance, to access an online service, to authenticate a person for security or governmental purposes or to access to some sort of digital or physical environments or resources. Hence, the security associated with the storage and communication of personal attributes is critical and has been subject of recent technical regulations and supranational harmonisations. This is for example the case in Europe, where elDAS2 Regulation has been recently approved, and ISO 18013-5/-7 specs. widely supported.

In short, digital identities are structured around the concept of identity wallets that store user (i.e., holder) credentials and attributes. This wallet-centric ecosystem renders users in control of their credentials and attributes, receiving issuer-issued identity attributes and presenting them autonomously to verifying parties (in possession of readers). While the presentation of identity attributes remains subject to the consent of the wallet user (e.g., selective disclosure), in future developments, it may also need to be subject to other controls such as regulatory restrictions, auditing, or compensations.

For instance, some issuers (e.g., governments or reputable institutions) might want to prevent the credentials they issued from being used in specific contexts e.g., specific types of illegitimate businesses. Also, issuers may want to closely track attributes usage (e.g., to early prevent abuse or misuse) or enforce further policies (e.g., for sensitive contexts) that requires ad-hoc per-action granting permissions.

In many of the specification implementations, today's wallets can autonomously present their attributes to verifiers, rendering issuers merely auditing the wallets sporadically and hence making very difficult any close tracking. Similarly, since the verifiers and the issuer do not have a direct relationship (apart from the setup e.g., defined in ISO 18013-5 spec.), it is also very inconvenient (e.g., not suitable for offline situations) and risky to make the verifier regularly inform issuers about wallet usage.

A straightforward solution to deal with this situation may be to setup an intermediary entity (i.e., API-type "gatekeeper") between the wallet and all possible verifiers able to read every exchange (e.g., attribute requests with verifier's context and returned attributes from wallet) and thus decide "who can access to what", but this poses non-assumable privacy concerns.

Therefore, there is still a need in the industry for a privacy-preserving solution that ensures enforcing regulatory, auditing or compensatory policies that is compatible with today's implementation(s) and future roadmaps. Namely, that is compliant with ISO 18013 series spec.

### SUMMARY OF THE INVENTION

The present invention provides a solution for all the aforementioned problems by a method for a reader to access user attributes from a wallet according to claim 1, an associated system according to claim 10, a reader according to claim 11, an authorizer according to claim 13, and a wallet according to claim 15. In dependent claims, preferred embodiments of the invention are defined.

In a first inventive aspect, the invention provides a method for a reader to access user attributes from a wallet. The method comprises the steps of:
- sending, by the wallet, a wallet public key to the reader which, in turns, forwards the wallet public key and an attribute request to an authorizer; wherein the attribute request indicates at least one user attribute;
- enforcing, by the authorizer, an access policy determining if the reader can access the at least one user attribute of the attribute request and, if authorized, generating a session key based on the wallet public key and a reader private key;
- receiving, by the wallet, a reader public key and the attribute request; wherein the wallet generates an attribute document comprising part or all of the requested at least one user attribute, and generates the session key based on a wallet private key and the reader public key;
- encrypting, by the wallet, the attribute document using the generated session key, and sending the encrypted attribute document to the reader;
- requesting, by the reader, the session key to the authorizer; and
- sending, by the authorizer, the session key to the reader for the reader to decrypt the attribute document and access the at least one user attribute comprised therein.

Throughout this document, a "personal attribute" refers to any attribute that is proper to a given person (either natural or legal). The personal attributes may comprise the name of a person, surname, birthdate, etc. or even physical attributes such as eye colour, skin colour or height. The personal attributes may also comprise (non-exhaustively) a driver license identification, a driver license status, a driver license type, a diploma, a real estate deed or a health insurance identification, or their respective status and validity. Personal attributes may advantageously encompass Personal Identification Data, PID, which are attributes that are commonly defined by some authority, such as a governmental identity, as necessary to uniquely identifying a person. In a preferred embodiment, the attributes are personal attribute(s) such as PID.

These attributes are typically "on-boarded" on the user wallet. That is, the issuer (or associated trustable delegatee) transfers, extracts or derives the user's personal attributes from their officially accepted location (e.g., Government register, passport, elD card, etc.) to a separate entity, typically a mobile phone, for their storage and equally acceptable usage via attribute verification. This onboarding or attribute issuance requires that the issuer attests that the attributes are genuine (e.g., through integrity checks, signatures, certificates, etc.). For instance, ISO/IEC 18013-5 spec. defines a mobile driving license (mDL) as a credential equally valid to a Physical Driver License (i.e., defined in ISO/IEC 18013-1) but, instead of being paper or plastic based, residing on the mobile device.

The user wallet may be embodied, preferably, as a user device such as a smartphone, a desk computer, a laptop, a touchpad, a personal digital assistant, or any other device having adequate processing capabilities and communication interfaces, such as described hereafter, storing or including a digital wallet (either software or hardware). The digital wallet may be an application locally stored on the user device or remotely accessed (e.g., web-browser based application) by the user device. In an embodiment, the digital wallet is associated with, or include in, a digital safe, a secure enclave or a secure element, SE. The data stored in the e.g., digital safe can only be accessed, read and write, by the digital wallet, so that other applications cannot access this data without requesting access to the digital wallet.

The wallet holder can present the stored attributes to different verifiers (e.g., service providers or relying parties) within the ecosystem. The verifiers interface the wallets through associated readers (i.e., physical apparatus) as defined in ISO/IEC 18013 series spec. These readers can be also embodied as smartphone, a desk computer, a laptop, etc. The wallet and reader pair undertakes the data exchange in a standard flow comprising device engagement phase (i.e., secure channel setup between the wallet and reader, done by NFC, barcode, QR code, deep web link, etc.) and data retrieval phase (online or offline, and direct exchange or token-based through issuer).

Nonetheless, even if there is a reader-wallet offline exchange, the invention focusses on the situation when at least the reader has communication capabilities and, in particular, is configured to address and communicate with an authorizing entity.

Namely, the present invention introduces this authorizing entity (so-called authoriser) during the device engagement phase which, briefly, undertakes the generation of the session key on behalf of the reader after asserting its access permissions to the requested attributes. That is, during a conventional device engagement phase, the wallet and reader performs a key agreement protocol based on their respective key pairs and shared secrets giving rise to the generation of the same session key (or the same modified form thereof) to encrypt and decrypt data exchanges. According to the invention, (only) the authoriser is provisioned with both reader public and private keys (e.g., ephemeral keys) and can generate the same session key than the wallet (i.e., the wallet uses its private key and reader public key, while the authoriser uses the reader private key and the wallet public key). The authoriser is thus in control of the reader private key and, hence, only the authoriser can generate the session key on behalf of the reader.

The authoriser can be a distant server operated by e.g., a Trust Service Provider (TSP). The TSP is a service provider that is considered as reliable or trusted, by an authority, such as a governmental authority or reputable institutions, and allowed to provide and preserve digital certificate(s), request or create key pairs, create and validate electronic signatures, and enforce access policies. For example, a list of TSP can be maintained by issuers. In an alternative embodiment, the authoriser may be issuer itself.

As mentioned before, the reader itself, or in combination with another element (e.g., verifier), is configured to send information over a secure communication network (e.g., Transport Layer Security, TLS) to the authoriser end via APIs using e.g., HTTP over TLS.

According to the invention, the reader is the physical apparatus interfacing the wallet that, conventionally, generated the same session key than the wallet. Therefore, it receives the attribute request from the verifier, which is the service provider ultimately asking for the attributes and verifying them before granting the service to the wallet holder. Nevertheless, according to some embodiments, the entities assuming the roles of the reader and the verifier can converge in some functions or even being the same entity and, for instance, in some embodiments, the reader itself can identify the necessary attributes for granting the service and therefore generate the attribute request itself.

Advantageously, the present invention allows enforcing any necessary policies to the reader while ensuring privacy, i.e., without exposing any personal information about the wallet user to the authorizing party. It creates a privacy-compliant "central" authorizing entity enforcing policies across a decentralized ecosystem.

Also, the implementation impact on verifier / reader side is low, with no security or trust downside for this component. Similarly, the impact on the wallet side is also very low. For instance, there is no extra layer of cryptography and no new exchanges between wallet and reader. Moreover, these added steps in the flow are transparent to the wallet user. Furthermore, since reader does not store its private key, it can be distributed and operated in an easier manner (e.g., lower level of security) than today's situation.

Additionally, or alternatively, in a particular embodiment, when the issuer decides that access to some specific digital credentials must be restricted, it may embed a policy in these credentials to indicate that reader authorisation is required before access. Issuers may choose to only issue these credentials to trustable wallets that will honour this policy. These policies are attached to credentials as "embedded disclosure policy" under regulation in Europe, i.e., a set of rules, embedded in an electronic attestation of attributes by its provider, that indicates the conditions that a wallet relying party has to meet to access the electronic attestation of attributes. In particular, this European draft regulation is proposing 3 "common embedded disclosure policies": "no policy", "authorised relying parties only policy", and "specific root of trust", the latter indicating that wallet users may only disclose the specific electronic attestation of attributes to authenticated relying parties with authentication certificates derived from a specific (or list of specific) root certificate(s). In a particular embodiment, the authorizer is this specific root of trust.

In a particular embodiment, the authorizer signs the attribute request with the reader private key and sends the signed attribute request to the reader for being forwarded to the wallet together with a reader certificate comprising the reader public key. This reader certificate allows the reader to authenticate itself to the wallet and has been signed by a certification authority (e.g., issuer or other).

Advantageously, since the wallet receives the reader certificate comprising the reader public key, it can verify the attribute request signature guaranteeing that the authoriser has already enforce the access policies applicable and granted access to the reader. Therefore, security is improved.

In a particular embodiment, the wallet sends the wallet public key to the reader together with a nonce usable during the generation of the session keys. Alternatively, the nonce can be separately generated by both the wallet and reader (or the authenticator on its behalf) from a shared secret.

In a preferred embodiment, the generation of the session keys by the wallet and the reader follows a non-authenticated key-agreement protocol such as Elliptic Curve Diffie-Hellman, ECDH, protocol.

The nonce may be either a random or a pseudo-random number, or also contain blocks of different information such as a timestamp or identifiers (wallet, issuer, reader, etc.). Be as it may, it shall be considered as a possession transcript to avoid replays and the skilled person recognizes that the actual format, size and other informative data sent in the nonce is specific to some technologies (e.g., it may be pre-required to first hash it to maintain a length).

Particularly, the ECDH symmetric key can be further passed through a Key Derivation Function (KDF) that typically requires a secret key, i.e., the ECDH key, and a secret value, i.e., the nonce. Thus, the session key (SK) is SK=KFD(ECDH key).

Since the invention replaces the reader by the authoriser during the key agreement with the wallet and the resulting session key generation, the nonce preferably originates from the authoriser thus preventing replay attacks e.g., using past session transcripts.

In a particular embodiment, the wallet generates along with the attribute document an outcome data labelling the at least one user attribute comprised therein. The wallet then sends the outcome data to the reader.

That is, each personal attribute on-boarded into the wallet has a pre-defined label (such as "Family_name", "First_name", "Address", "Birthdate", etc.) or alphanumeric identifier that may render them recognizable at least by the authenticator. These labels may be defined by the issuer itself or by a technical specification. These labels, that may be universal, do not contain the actual values of the attributes e.g., the label is "Family_name" or #2 but not "Smith".

In a particular embodiment, the reader sends the outcome data to the authorizer when requesting the session key, and the authorizer accesses the labels of the at least one user attribute of the attribute document to enforce an additional policy based on the actual attribute labels.

In a preferred embodiment, the at least one user attribute of the attribute document has been selectively consented by the user wallet. The set of attributes originally requested may differ from those finally consented and returned by the wallet and, hence, having a manner to cross-check what is going to be actually disclosed by the wallet to the reader further improves safety. For instance, the end user may decline to share some attributes, or they may not be present in the wallet. Since these labels in the outcome data are "anonymized" (i.e., authoriser does not access the actual attributes values), privacy is still assured.

Since the outcome data contains labels of the actual attributes returned by the wallet, the additional policy may be fine-grained allowing to trigger one or more pre-defined actions.

The authorizer already knows the context of the attribute presentation (i.e., reader involved, attributes requested, now attributes returned, etc.) and, for instance, if a particular "undesired" label is found, the authoriser can simply deny the access to the actual attributes of the attribute document to the reader. That is, it doesn't handover the session key to the reader for decryption of the attribute document.

This may be the case when the wallet is going to disclose (e.g., erroneously, or coercively) some further personal attributes not needed for the ongoing presentation. Similarly, the authenticator, given its "central position", may monitor or audit readers activities to e.g., identify, alert, and remedy malfunctions or abuses in the ecosystem. Therefore, the additional policies may be further driven by some sort of Artificial Intelligence algorithm specifically trained to infer such situations. Likewise, if needed, the authoriser can check that all the requested attributes that were asked for are present in the response.

The authoriser can similarly grant the access (e.g., later handing over the session key to the reader) if the situation is normal (e.g., reader, action, and returned attributes safe-listed).

There is an intermediary situation when the access grant is conditional to proving that some missing requisites are finally met. This is the case when the reader needs to purposively ask for further permissions to access some of the returned attributes, or needs to compensate (e.g., financially) the authoriser for the ongoing authorisation service. The latter situation will become especially important to monetize the digital ID ecosystem. Since the wallet can autonomously present attributes to verifiers' readers, there has been little incentive for the readers to cooperate or participate in any monetization program, letting issuers out of scope of some activities. Thus, this embodiment may envisage a fine-grained monetization program per attribute returned, context, or usage beyond any "flat rate" applied today.

In a particular embodiment, the reader and/or the wallet registers the performed attribute presentation for auditing purposes. This allows the issuers to regularly keep monitoring wallet and reader usages and check they are honouring the new policy enforcing mechanism.

In a second inventive aspect, the invention provides a system for a reader to access user attributes from a wallet. The system comprises:
- the reader, being configured to
   ∘ receive a wallet public key from the wallet and forward the wallet public key and an attribute request to an authorizer; wherein the attribute request indicates at least one user attribute;
   ∘ receiving from the wallet an attribute document encrypted using a session key;
   ∘ request a session key to the authorizer; and
   ∘ receiving from the authorized the session key to decrypt the attribute document and access the at least one user attribute comprised therein;
- the wallet, being configured to
   ∘ send the wallet public key to the reader;
   ∘ receive a reader public key and the attribute request from the reader;
   ∘ generate the attribute document comprising part or all of the requested at least one user attribute of the attribute request;
   ∘ generate the session key based on a wallet private key and the reader public key; and
   ∘ encrypt the attribute document using the generated session key, and send the encrypted attribute document to the reader; and
- the authorizer, being configured to
   ∘ enforce an access policy determining if the reader can access the at least one user attribute of the attribute request and, if authorized, generate the session key based on the wallet public key and a reader private key; and
   ∘ send to the reader the session key for the reader to decrypt the attribute document and access the at least one user attribute comprised therein.

In a third inventive aspect, the invention provides a reader configured to:
- receive an attribute request indicating at least one user attribute;
- receive a wallet public key from the wallet and forward the wallet public key and the attribute request to an authorizer;
- receiving from the wallet an attribute document encrypted using a session key;
- request a session key to the authorizer; and
- receiving from the authorized the session key to decrypt the attribute document and access the at least one user attribute comprised therein.

In a particular embodiment, the reader further receives the outcome data from the wallet, the outcome data labelling the at least one user attribute of the attribute document, and forwards the outcome data to the authorizer when requesting the session key.

In a fourth inventive aspect, the invention provides an authorizer configured to
- receive the wallet public key and the attribute request from the reader, wherein the attribute request indicates at least one user attribute;
- enforce an access policy determining if the reader can access the at least one user attribute of the attribute request and, if authorized, generate the session key based on the wallet public key and a reader private key;
- receiving a session key request from the reader; and
- send to the reader the session key for the reader to decrypt the attribute document and access the at least one user attribute comprised therein.

In a particular embodiment, the authorizer signs the attribute request with the reader private key.

In a particular embodiment, the authorizer further receives the outcome data and access the labels of the at least one user attribute of the attribute document for enforcing an additional policy based on the actual attribute labels.

In a fifth inventive aspect, the invention provides a wallet configured to
- send the wallet public key to the reader;
- receive a reader public key and the attribute request from the reader, wherein the attribute request indicates at least one user attribute;
- generate the attribute document comprising part or all of the requested at least one user attribute of the attribute request, wherein the wallet generates along with the attribute document an outcome data labelling the at least one user attribute comprised therein,
- generate the session key based on a wallet private key and the reader public key; and
- encrypt the attribute document using the generated session key, and send the encrypted attribute document and the outcome data to the reader.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: shows a digital ID ecosystem, according to some embodiments of the invention.
- Fig. 2: shows a system for asserting access conditions to a reader, according to some embodiments of the invention.
- Fig. 3: shows an associated workflow for the system of figure 2, according to some embodiments of the invention.

### DETAILED DESCRIPTION OF THE INVENTION

As it will be appreciated by one skilled in the art, aspects of the present invention may be embodied as a method for a reader 3_{1A}, 3_{1A}, 3ᵢⱼ to access user attributes from a wallet 2, a corresponding system 10, a wallet 2, a reader 3_{1A}, 3_{1A}, 3ᵢⱼ, or an authoriser 5.

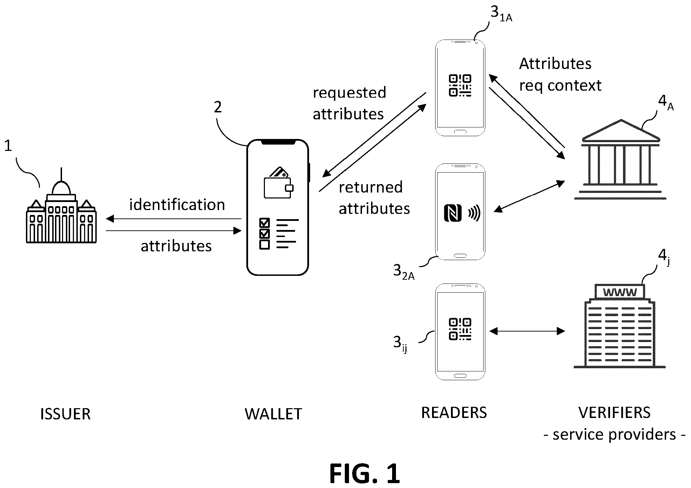

In **figure 1****,** it is depicted a typical digital ID ecosystem as per defined in ISO 18013 series specs. As mentioned, the ecosystem includes an issuer 1 in charge of issuing the attributes and credentials (i.e., mDL formatted), a wallet 2 in charge of storing and selectively presenting the attributes, and verifiers 4_{A}, 4ⱼ in charge of receiving the attributes and grant access to services. The verifiers 4_{A}, 4ⱼ interfaces wallets 2 through one or more readers 3_{1A}, 3_{1A}, 3ᵢⱼ, which are the physical devices equipped with reading capabilities (e.g., Bluetooth, NFC, WiFi direct, etc.). The trust in this ecosystem is based on public-private key cryptography where attribute docs (mDL docs) are signed by issuing authorities 2 using their private key and verified using the issuing authority's public key.

As known, in further embodiments not shown herein, the verifier can also be a website rather than a physical device (e.g., as explained in in ISO 18013-7, or ISO 23220-4). In this case, the verifier is directly the reader, and the online services are accessible through https connection. Nevertheless, for illustrative purposes, the following examples will separate the roles of verifiers and readers even if they may be embodied together.

From an attribute standpoint (compliant with ISO/IEC 18013 series specs.), the lifecycle can be as follows. In the issuance, the issuing authority 2 firsts authenticates the identity of the wallet's user, and then creates a mDL doc containing a set of user's attributes, and a Concise Binary Object Representation, CBOR,-encoded object containing e.g., digest algorithm, individual digests of the attributes or namespaces, and validity. This resulting object, known as mobile security object (MSO), is further signed by the issuer 2. The signatures chain is typically as follows: Root CA → Issuing CA → Doc Signer → Attribute Signature.

Then, the issuer 2 binds the mDL doc with the wallet public key and transfers (i.e., on-boards) the mDL to the wallet 2 which authenticates the issuer 1 and proceeds with the secure storage and sets access control parameters (e.g., passcode, biometry, etc.) for the user to be able to selectively disclose the attributes.

When the user wishes to consume some online/onsite services, the service provider becomes the verifier 4_{A}, 4ⱼ according to the invention, which uses a reader 3_{1A}, 3_{1A}, 3ᵢⱼ to interface the wallet 2. During presentation phase, the verifier 4_{A}, 4ⱼ decides which attributes needs to verify (i.e., by instructing or creating itself the ISO/IEC 18013 spec. encoded document request) and the reader 3_{1A}, 3_{1A}, 3ᵢⱼ triggers the device engagement phase. First, the reader (or wallet, according to recent developments) initiates the request through e.g., barcode (e.g., QR code-type) or NFC. The reader and wallet exchange their respective certificates (or at least their public keys), signed by any CA within the chain of trust, and a session transcript (i.e., a nonce) for verification and authentication purposes. Then, there is a reader-wallet key agreement protocol using the session transcript that gives rise to session keys generated separately by the reader and the wallet.

The wallet 2, through the holder, consents or selectively disclose some or all the requested attributes, creates a presentation object (i.e., ISO formatted, including *inter alia* issuer and wallet signatures), known herein as attribute document, and encrypts it with the session key.

The encrypted object is received by the reader, which decrypts it using an equivalent session key, and verifies issuer signature, device signature, session transcript, and checks the values of the different attributes to grant/deny the requested service accordingly.

To perform these actions, the user's personal device, namely a mobile device, comprises a digital wallet application 2 and the personal attributes, or can access to it through web browser. The personal device also includes (micro)processor(s) and/or (micro)controller(s) (not represented), as data processing means, one or several memories (not represented), as data storing means, and Input/Output (or I/O) interfaces (not represented). The processor executes notably, besides an Operating System (or OS), the digital wallet application as a (e.g., built-in) application or a web-browser type application. The device I/O interface may comprise a display screen, microphone, cameras, a fingerprint reader, speakers and (optionally) a keyboard, as an MMI, so as to interact with the user. The display screen(s) may be used for displaying personal attributes requested by verifiers and prompting the user to consent via e.g., typing the passcode.

The personal device is configured to establish a secure channel with backend servers such as the issuer 2, service provider(s) (known as verifiers) and the associated readers. In this example, there are 3 service providers or verifiers 4_{A}, 4ⱼ, each associated to one or more readers 3_{1A}, 3_{1A}, 3ᵢⱼ. The communication network(s) may include a secure communication protocol over a computer network or a mobile radio-communication network(s). Additionally or alternately, the communication network(s) may include a WLAN (acronym for "Wireless Local Area Network"), an Internet and/or Intranet type network(s). For instance, the communication network may be Hypertext Transfer Protocol Secure (HTTPS) over TLS.

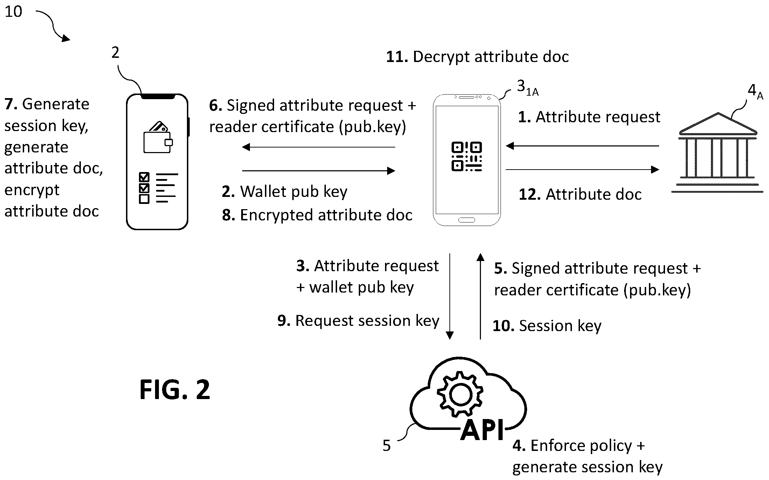

**Figure 2****,** in comparison with the traditional system of figure 1, depicts a system 10 with a new component, the authoriser 5, for asserting access conditions to the reader.

The role of the authoriser 5 according to the invention is to generate, on behalf of the reader 3_{1A}, the same session key (SESS. KEY. READER) that the wallet 2 is going to use during the data exchange and securely share it with the reader 3_{1A} only if it has permissions (i.e., SESS.KEY.READER = SESS.KEY.WALLET). This is first based on the original attribute request prepared by the verifier, and received through the reader, and the context for the attribute presentation and, then, in a further embodiment, based on the labels (i.e., without actual values) of the returned attributes from the wallet. Hence, the solution is always privacy compliant.

The authoriser 5 is, in particular, in full control of the reader private key. That is, the authoriser is the only component in the ecosystem knowing, and being capable of using, the reader private key (READER.PRIV.KEY). The authoriser 5 can be provisioned with these keys (READER.PRIV.KEY, READER.PUB.KEY) by the same authority 6 that provisions the reader(s) with the difference that, the private key remains within authoriser's perimeter, while the reader public key, or the associated (signed) certificate created by the authority, can be either forwarded to the reader or also be kept by the authoriser. Preferably, the reader certificate containing the reader public key and signed by the authority reaches the reader for its storage and use.

Another aspect for the prior setup is that the authoriser 5 should get to know the different verifiers 4_{A}, 4ⱼ and the access policies to be enforced to properly grant/deny access. To this end, the authoriser 5 may require each service provider, or associated verifiers they would like to use, to be enrolled subject to successfully perform a Know-Your-Business verification confirming their legal statuses and their compliance with some regulations (e.g., Anti-Money Laundering). Therefore, the authoriser can pre-check that all the company's business activities are within a predefined safelist that can be proposed, reviewed, or updated by governments or other institutions.

In figure 2, the verifier 4_{A} wishes to verify some user's attributes and hence starts creating or requesting the creation of the attribute request (sometimes known as "plain doc request") with the list of needed attributes and, optionally, information identifying the verifier, and purpose or type of transaction. That is, the attribute request provides context about the attribute presentation. The verifier 4_{A} passes this attribute request (or the request for its generation) to the reader 3_{1A} that shall interface the wallet 2 which automatically triggers the reader authentication protocol where the wallet 2 and the reader 3_{1A} are supposed to follow the key agreement protocol up to generate respective session keys. For this purpose, the wallet 2 sends its wallet public key (WALLET.PUB.KEY) to the reader 3_{1A}, which forwards it to the authoriser 5 together with the attribute request.

The authoriser 5 then checks the elements of the attribute request to enforce the access policy ultimately determining if the reader can access or not some of the requested attributes. If the reader is authorized, the authoriser then generates a session key (SESS. KEY. READER), using a key agreement protocol, based on the wallet public key and a reader private key. The authoriser can also sign the attribute request for the wallet to verify its signature.
SESS.KEY.READER = KDF(ECDH(WALLET.PUB.KEY, READER.PRIV.KEY))

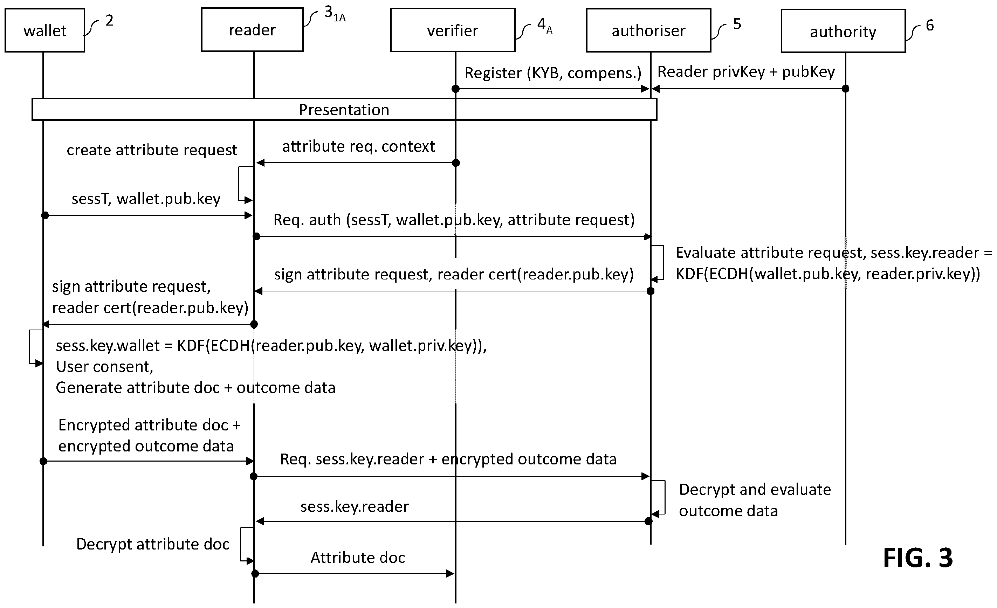

The key session generation by the authoriser may happen afterwards, when the reader actually requests the session key to resume the device engagement protocol and eventually decrypt messages coming from the wallet 2. In a particular embodiment, when the wallet also prepares an outcome data with labels of the returned attributes (see figure 3 for more details), the authoriser only generates the session key after enforcing the further policies on the returned attributes. This saves computational resources and increases security.

The wallet then receives the (signed) attribute request and the reader certificate comprising the reader public key. In response, after verifying the verifier and authoriser signatures, the wallet prompts the user to consent the disclosure of the requested attributes leading to a set of attributes chosen by the user (i.e., selective disclosure). This is why the attribute document comprises *"part or all of the requested* (i.e., indicated in the attribute request) at *least one user attribute".* The wallet then encodes these consented/returned attributes as the attribute document and generates the session key (SESS. KEY. WALLET) based on a wallet private key and the reader public key extracted from the certificate.
SESS.KEY.WALLET = KDF(ECDH(READER.PUB.KEY, WALLET.PRIV.KEY))

As explained, a nonce or session transcript can be exchanged by the reader and wallet during the device engagement phase to be used during the separate generation of the session keys. The generation of the session keys by the wallet and the reader follows a non-authenticated key-agreement protocol, preferably, an Elliptic Curve Diffie-Hellman, ECDH, protocol. Further, a key derivation function on the resulting key, preferably using the nonce or session transcript, may give rise to the session key. It is to be noted that the session key is usable per presentation, as the wallet and reader (stored by the authoriser) key pairs can be ephemeral and the nonce or session transcript changes with every establishment of the secure communication reader-wallet.

The wallet 2 encrypts this attribute document using the just generated session key, and sends the encrypted attribute document to the reader, which doesn't have the session key but requests it to the authorizer. If there are no further policies to enforce, since the authoriser already checked the attribute request against the applicable access policies, and authorised the access, the authoriser sends back the session key to the reader for the reader to decrypt the attribute document and access the at least one user attribute comprised therein.

The reader-wallet can keep the session open encrypting any further exchanges with the just generated session keys. The rest of the exchanges can be as per ISO/IEC 18013-5 spec.

**Figure** 3 proposes a further embodiment of the present invention where the authoriser 5 is configured to enforce further policies based on the actual returned attributes from the wallet 2. In particular, the wallet 2 generates along with the attribute document an outcome data labelling the at least one user attribute comprised therein, that is, those returned by the wallet. The wallet may realize that the outcome data is necessary because e.g., some attributes of the wallet have policies embedded and/or because the wallet sees the signature done by the authoriser in the attribute request using the reader private key (i.e., in metadata). Be as it may, the wallet generates this outcome data to the reader together with the attribute document.

This outcome data can be a separate file, or an additional field of the attribute document. If separated, the attribute document can also indicate that the outcome data has been generated.

The reader may keep the encrypted attribute document but sends the outcome data to the authorizer when requesting the session key. The authorizer can then access the labels of the returned attributes (i.e., contained or reference in the attribute document) and enforce any additional policies based on the actual attribute labels. The attribute values are not exposed to the authoriser, which is especially important when the attributes are personal identification data, PID.

Referring back to figure 3, in a prior setup process, the verifier enrolls in the authorization service furnishing information about its business activities, legal status, etc. during a KYB process also setting up validity periods, and safelisted activities and accessible attributes from users that can be conditioned or not to some sort of compensation conditions. This may be mandatory and requested by issuers 1 or authorities 6 before provisioning the reader key pair. In a particular embodiment, the authoriser 5 request itself the generation of the reader key pair, and associated reader certificate, to the authority 6. As mentioned, the authoriser 5 then forwards the reader certificate to the reader.

During presentation, the service provider or verifier prepares the attribute request, defining the scope of the request. This attribute request can be also generated by the reader itself, after instructions from the verifier (i.e., plain doc request). Be as it may, the reader triggers the engagement phase with the wallet and the wallet starts exchanging the session transcript or nonce, and wallet public key. The generation of the attribute request may occur before or after the device engagement phase starts.

The reader requests authorisation to the authoriser by sending the session transcript, attribute request and validity. The authoriser evaluates the validity of the attribute request and enforces the access policies that were setup before. If the authoriser kept the reader public key or the reader certificate from the authority, it can either retrieve it or generate it now. And, finally, if the authoriser authorises the access to the reader, it signs the attribute request and generates the session key.

The authoriser sends back the signed attribute request and, if it kept the reader certificate, also the reader certificate. The reader then forwards these elements to the wallet which extracts the reader public key, validates the signatures in the reader certificate (possibly also metadata or further signatures indicating the presence of the authoriser) and generates an equivalent session key. The wallet processes the attribute request by prompting the user to consent the listed requested attributes resulting in a returned list of attributes that is encoded as an attribute document (as per ISO 18013-7 spec. format).

The wallet further generates the outcome data labelling the attributes contained or referenced in the attribute document. This file is part of the attribute document or, preferably, a separate file. The wallet finally encrypts these elements using the session key.

The wallet returns the encrypted attribute document and encrypted outcome data (assuming they are in separate files) to the reader, which forwards only the encrypted outcome data while requesting the session key to the authoriser.

The authoriser receives and decrypts the outcome data, and enforces the further policies considering the actual attributes returned by the wallet. If some permissions are missing, or further compensation are required, the authoriser separately contacts the verifier or an associated service provider to ensure the missing requisites are met. Otherwise, authoriser will abort the flow, will deny access to the reader, and hence will not return or will not generate at all the session key.

If access is eventually granted, the reader will finally get the session key and will be able to decrypt the attribute request to resume the normal ISO 18013 spec. protocol, i.e., verifying the signature of the wallet with the wallet public key, extract information, verify attribute values, etc. The wallet and reader can also register this presentation for auditing purposes by the issuer, that will periodically check if they are honouring the new process.

## Claims

1. A method for a reader to access user attributes from a wallet, the method comprising the steps of:
- sending, by the wallet, a wallet public key to the reader which, in turns, forwards the wallet public key and an attribute request to an authorizer; wherein the attribute request indicates at least one user attribute;
- enforcing, by the authorizer, an access policy determining if the reader can access the at least one user attribute of the attribute request and, if authorized, generating a session key based on the wallet public key and a reader private key;
- receiving, by the wallet, a reader public key and the attribute request; wherein the wallet generates an attribute document comprising part or all of the requested at least one user attribute, and generates the session key based on a wallet private key and the reader public key;
- encrypting, by the wallet, the attribute document using the generated session key, and sending the encrypted attribute document to the reader;
- requesting, by the reader, the session key to the authorizer; and
- sending, by the authorizer, the session key to the reader for the reader to decrypt the attribute document and access the at least one user attribute comprised therein.

2. The method according to claim 1, wherein the authorizer signs the attribute request with the reader private key and sends the signed attribute request to the reader for being forwarded to the wallet together with a reader certificate comprising the reader public key.

3. The method according to any of claims 1 or 2, wherein the wallet sends the wallet public key to the reader together with a nonce usable during the generation of the session keys.

4. The method according to claim 3, wherein the generation of the session keys by the wallet and the reader follows a non-authenticated key-agreement protocol such as Elliptic Curve Diffie-Hellman, ECDH, protocol.

5. The method according to any of claims 1 to 4, wherein the wallet generates along with the attribute document an outcome data labelling the at least one user attribute comprised therein, and sends the outcome data to the reader.

6. The method according to claim 5, wherein the reader sends the outcome data to the authorizer when requesting the session key, the authorizer accessing the labels of the at least one user attribute of the attribute document and enforcing an additional policy based on the actual attribute labels.

7. The method according to claim 6, wherein enforcing the additional policy triggers one or more of the following actions:
• denying the access to the actual attributes of the attribute document to the reader;
• granting the access to the actual attributes of the attribute document to the reader;
• granting the access to the actual attributes of the attribute document to the reader as long as the reader, or an associated entity, proves that a further requisite has been met.

8. The method according to any of claims 1 to 7, wherein the at least one user attribute of the attribute document has been selectively consented by the user wallet.

9. The method according to any of claims 1 to 8, wherein the reader and/or the wallet registers the performed attribute presentation for auditing purposes.

10. A system for a reader to access user attributes from a wallet, the system comprising:
- the reader, being configured to
∘ receive a wallet public key from the wallet and forward the wallet public key and an attribute request to an authorizer;
∘ receiving from the wallet an attribute document encrypted using a session key;
∘ request a session key to the authorizer; and
∘ receiving from the authorized the session key to decrypt the attribute document and access the at least one user attribute comprised therein;
- the wallet, being configured to
∘ send the wallet public key to the reader;
∘ receive a reader public key and the attribute request from the reader;
∘ generate the attribute document comprising part or all of the requested at least one user attribute of the attribute request;
∘ generate the session key based on a wallet private key and the reader public key; and
∘ encrypt the attribute document using the generated session key, and send the encrypted attribute document to the reader; and
- the authorizer, being configured to
∘ enforce an access policy determining if the reader can access the at least one user attribute of the attribute request and, if authorized, generate the session key based on the wallet public key and a reader private key; and
∘ send to the reader the session key for the reader to decrypt the attribute document and access the at least one user attribute comprised therein.

11. A reader, wherein the reader is configured to
- receive a wallet public key from the wallet and forward the wallet public key and an attribute request to an authorizer; wherein the attribute request indicates at least one user attribute;
- receiving from the wallet an attribute document encrypted using a session key;
- request a session key to the authorizer; and
- receiving from the authorized the session key to decrypt the attribute document and access the at least one user attribute comprised therein.

12. The reader according to claim 11, wherein the reader further receives the outcome data from the wallet, the outcome data labelling the at least one user attribute of the attribute document, and forwards the outcome data to the authorizer when requesting the session key.

13. An authorizer, wherein the authorizer is configured to
- receive the wallet public key and the attribute request from the reader, wherein the attribute request indicates at least one user attribute;
- enforce an access policy determining if the reader can access the at least one user attribute of the attribute request and, if authorized, generate the session key based on the wallet public key and a reader private key;
- receiving a session key request from the reader; and
- send to the reader the session key for the reader to decrypt the attribute document and access the at least one user attribute comprised therein.

14. The authorizer according to claim 13, wherein the authorizer further receives the outcome data and access the labels of the at least one user attribute of the attribute document for enforcing an additional policy based on the actual attribute labels.

15. A wallet, wherein the wallet is configured to
- send the wallet public key to the reader;
- receive a reader public key and the attribute request from the reader, wherein the attribute request indicates at least one user attribute;
- generate the attribute document comprising part or all of the requested at least one user attribute of the attribute request, wherein the wallet generates along with the attribute document an outcome data labelling the at least one user attribute comprised therein,
- generate the session key based on a wallet private key and the reader public key; and
- encrypt the attribute document using the generated session key, and send the encrypted attribute document and the outcome data to the reader.
